# DEMANDE DE BREVET EUROPEEN

(11) **EP 2 525 129 A2**
(43) Date de publication de la demande: **21.11.2012**
(21) Numéro de dépôt: 12405047.7
(22) Date de dépôt: 18.05.2012
(51) Int. Cl.: F16L 47/03, F16L 59/20, B29C 65/34

(54) **Procédé de raccordement de conduits de chauffage urbain et manchon de raccordement pour la mise en oeuvre de ce procédé**

(30) Priorité: 20.05.2011 CH 8782011
(71) Demandeur: PLCO Pipelines Construction S.A., 1073 Savigny (CH)
(72) Inventeur: Gentizon, Frédéric James, 6300 Zug (CH); Spinello, Giuseppe, 1007 Lausanne (CH)
(74) Mandataire: Nithardt, Roland

(57) **Abrégé**

L'invention concerne un procédé de raccordement de tronçons de conduits d'un réseau de chauffage urbain rapide et efficace ainsi que le manchon utilisé pour ce raccordement. Ce manchon de raccordement (13) est réalisé en un matériau thermosoudable et est constitué d'un corps central (13a) et de deux embouts d'extrémité (13b, 13c). Ces embouts d'extrémité sont agencés pour pouvoir être mis en place sur la gaine extérieure rigide de deux tronçons de conduits à raccorder et électrosoudés sur cette gaine. A cet effet, les embouts d'extrémité (13b, 13c) sont chacun pourvus d'une résistance électrique intégrée (21b, 21c) couplée par une cosse (22b, 22c) à des moyens de connexion électrique qui fournissent le courant nécessaire pour provoquer par effet Joule la fusion des gaines rigides des conduits avec les embouts d'extrémité du manchon (13). Une zone centrale flexible (13d) du corps (13a) permet l'introduction du manchon sur les tronçons de conduits à raccorder lorsque ceux-ci ne sont pas parfaitement alignés.

## Description

### Domaine technique

La présente invention concerne un procédé de raccordement de tronçons de conduits d'un réseau de chauffage urbain, ces conduits comportant un tube central métallique, une gaine rigide périphérique en un matériau synthétique thermosoudable, coaxiale au tube central, et au moins une couche d'un matériau thermiquement isolant remplissant l'espace ménagé entre ledit tube central et ladite gaine rigide périphérique, cette couche isolante contenant des fils électriques et/ou optiques d'un circuit de contrôle du réseau de chauffage urbain.

L'invention concerne également un manchon de raccordement de tronçons de conduits d'un réseau de chauffage urbain pour la mise en oeuvre de ce procédé, lesdits conduits comportant un tube central métallique, une gaine rigide périphérique en un matériau synthétique thermosoudable, coaxiale au tube central, et au moins une couche d'un matériau thermiquement isolant remplissant l'espace ménagé entre ledit tube central et ladite gaine rigide périphérique, ladite couche isolante contenant des fils électriques ou optiques d'un circuit de contrôle du réseau de chauffage urbain.

### Technique antérieure

Le problème technique posé par la mise en place d'un réseau de chauffage à distance, appelé couramment chauffage urbain, est principalement lié à la réalisation des connexions entre les différents tronçons de conduits. Les conduits utilisés, qui sont produits en usine, sont composés d'un tube métallique central, en acier, d'une couche épaisse d'un matériau isolant entourant ce tube central pour assurer l'isolation thermique, cette couche étant réalisée de préférence en un matériau synthétique tel que par exemple une mousse en polyuréthane, et d'une gaine rigide formant une coque de protection de cette couche isolante, réalisée en une autre matière synthétique, par exemple en polyéthylène de haute densité. Cette gaine rigide est disposée coaxialement autour du tube central. En outre, afin de pouvoir surveiller le réseau et détecter d'éventuels défauts de fonctionnement, par exemple des défauts d'étanchéité, de préférence deux fils électriques, sous forme de conducteurs nus, sont noyés dans la couche isolante tout au long des conduits.

La mise en place d'un réseau de plusieurs kilomètres de longueur, avec des ramifications, nécessite la pose par tronçons de conduits de sections différentes, raccordés entre eux de façon totalement sécurisée. Chaque raccordement de deux tronçons identiques de conduits implique tout d'abord la soudure des deux tubes centraux de chacun des deux tronçons à raccorder, cette soudure devant être vérifiée en ce qui concerne son étanchéité, sachant que le tube central sera amené à véhiculer un fluide chaud sous pression de la centrale génératrice d'énergie thermique aux sites d'utilisation. Après cette première opération, les poseurs doivent effectuer la connexion des fils électriques en veillant à ce qu'ils ne puissent pas entrer en contact entre eux ou avec le tube central métallique et provoquer un court-circuit. L'opération suivante consiste à mettre en place un manchon de raccordement, du type électrosoudable, qui est destiné à recouvrir la zone de soudure du tube central et de connexion des fils électriques et à s'emboîter sur les extrémités des deux gaines rigides extérieures pour pouvoir être soudé de façon totalement étanche sur les deux tronçons de conduits. A cet effet, on utilise actuellement comme manchons de raccordement des tronçons de gaine rigide dont le diamètre est sensiblement supérieur à celui des tronçons de conduits fabriqués en usine. Pour effectuer le soudage de ces manchons sur les conduits, on a ensuite recours à des bandes métalliques que l'on fixe à l'aide d'agrafes sur chaque extrémité des tronçons à raccorder. Après la mise en place de ces bandes métalliques, les extrémités du manchon sont chauffées au chalumeau afin de les rétracter sur les bandes métalliques. Ensuite, en branchant un équipement spécial composé d'une génératrice et d'un appareil à souder, on fait passer un courant et une tension électriques donnés à travers les bandes métalliques, afin de les chauffer à une température donnée, et ainsi obtenir le soudage du manchon sur la gaine des conduits par fusion de matière en ses deux extrémités, la soudure devant bien entendu être parfaitement étanche pour éviter une quelconque infiltration d'humidité à l'intérieur du réseau. Ces opérations sont relativement faciles à exécuter en atelier ou au laboratoire, notamment sur des conduits de petite section, mais beaucoup plus difficiles sur un chantier, dans une fouille et en particulier sur des conduits de gros diamètre. Le risque de défaut d'étanchéité étant important, cette opération finale est réservée actuellement à des spécialistes formés qui sont en principe des experts délégués par les compagnies qui fabriquent les conduits.

Après le soudage du manchon et avant son remplissage avec un matériau isolant, une vérification de la soudure doit être effectuée, ce qui se fait à travers des ouvertures percées dans la paroi du manchon en vue d'injecter les composants de la mousse de polyuréthane ou similaire.

On constate que l'ensemble de ces opérations est à la fois long, compliqué, coûteux et risqué puisque, en cas de défaut d'étanchéité ou de défaut électrique constatés, toute la démarche est à reprendre.

La demande de brevet allemand DE 102 11 703 A1 décrit un système de soudure de tronçons de conduits de ce type utilisant un manchon thermosoudé, mais dans lequel l'opérateur est obligé de prépare,r sur le terrain et de façon particulièrement difficile, des bandes de chauffage par effet Joule, de les mettre en place sur les tronçons à raccorder et d'adapter sur place l'intensité du chauffage en vue de provoquer la fusion de la matière.

Cette manière de procéder est complexe et n'apporte pas les garanties que pourra apporter un manchon thermochauffant fabriqué en usine, contrôlé et ajusté en puissance pour assurer la sécurité et l'efficacité de la liaison recherchée.

Il en est de même pour les objets décrits respectivement dans la demande internationale de brevet publiée sous le N° WO 84/03346 et la demande britannique GB 2319319 A qui reproduisent les mêmes défauts.

Le brevet américain US 5,736,715 décrit un dispositif de manchonnage de deux tronçons de conduits de chauffage à distance à souder entre eux pour créer un réseau. Il s'agit d'une liaison artisanale qui n'utilise pas un manchon thermosoudable fabriqué en usine dont la soudure sur les deux tronçons à raccorder s'effectue de façon simple en connectant à une source classique les bornes de raccordement prévues sur le manchon, cette source étant adaptée à ce manchon.

La demande de brevet européen publiée sous le N° 0 307 200 A2 décrit un manchon de raccordement souple réalisé en un matériau thermorétractable. Ce principe ne répond pas aux exigences en matière de chauffage à distance.

Il n'existe actuellement aucune solution permettant de simplifier et simultanément de sécuriser l'ensemble des opérations ci-dessus. Un défaut dans la soudure d'un manchon sur une gaine de conduit permet des infiltrations d'humidité. Ce risque est amplifié car les conduits, en raison de leur dilatation, bougent dans le lit de sable dans lequel ils sont enterrés, et un défaut de soudure d'un manchon se traduit par des déplacements relatifs de ce manchon et du conduit, ces déplacements entraînant une pénétration de sable hautement abrasif dans la zone de jonction et, à terme, du jeu entre le manchon et le conduit correspondant.

Dans le domaine de l'appareillage de réseaux d'eau et de gaz naturel, on connaît des manchons électrosoudables permettant de raccorder entre eux des conduits en polyéthylène. Toutefois il s'agit de manchons simples, qui sont destinés à connecter entre eux deux éléments devant supporter des pressions élevées, notamment en polyéthylène (PE) dans le cadre de réseaux d'eau potable ou de gaz naturel.

### Exposé de l'invention

La présente invention se propose de pallier l'ensemble des inconvénients mentionnés ci-dessus en développant un procédé de raccordement de conduits de chauffage à distance qui permet de simplifier les opérations et surtout de sécuriser les raccordements de façon simple, efficace et économique.

Ce but est atteint par le procédé tel que défini en préambule et **caractérisé en ce que**, pour raccorder deux tronçons de conduits disposés dans le prolongement l'un de l'autre, l'on effectue successivement les opérations suivantes:
- l'on soude les tubes centraux métalliques des extrémités juxtaposées des deux tronçons de conduits,
- l'on connecte les fils du circuit de contrôle de chaque tronçon de conduit,
- l'on met en place un manchon de raccordement thermosoudable autour de la gaine rigide périphérique des deux conduits à raccorder, au niveau de leur jonction, ledit manchon de raccordement étant réalisé en un matériau thermosoudable et constitué d'un corps central et de deux embouts d'extrémité, au moins lesdits embouts d'extrémité ayant un diamètre intérieur au moins approximativement égal au diamètre extérieur des tronçons de conduit à raccorder et étant pourvus respectivement de deux résistances électriques intégrées, disposées à proximité de leur extrémité respective, et couplées rigidement à des moyens de connexion électrique desdites résistances électriques,
- l'on procède au thermosoudage du manchon de raccordement sur la gaine rigide périphérique en connectant lesdits moyens de connexion électrique à une source d'alimentation électrique adaptée audit manchon, et
- l'on remplit l'espace ménagé entre le tube central métallique et le manchon de raccordement soudé sur des zones de recouvrement desdits tronçons par injection d'une matière synthétique isolante expansible.

De façon avantageuse, l'on effectue le thermosoudage du manchon de raccordement sur les tronçons de conduits en chauffant ledit manchon de raccordement au moyen des résistances électriques intégrées pour provoquer la fusion superficielle des surfaces en contact.

Ce but est également atteint par le manchon de raccordement tel que défini en préambule et **caractérisé en ce que** ledit manchon de raccordement est réalisé en un matériau thermosoudable et constitué d'un corps central et de deux embouts d'extrémité, au moins lesdits embouts d'extrémité ayant un diamètre intérieur au moins approximativement égal au diamètre extérieur des tronçons de conduit à raccorder et étant pourvus respectivement de deux résistances électriques, disposées à proximité de leur extrémité respective, intégrées dans lesdites extrémités et connectées à deux cosses agencées pour être connectées à des moyens de connexion électrique desdites résistances électriques, lesdits moyens de connexion électrique étant agencés pour provoquer la fusion superficielle des surfaces en contact.

Afin de pouvoir mettre en place le manchon sur les tronçons de conduits soudés, lesdits embouts d'extrémité dudit manchon ont de préférence une section intérieure légèrement supérieure à la section extérieure des tronçons de conduits.

De façon avantageuse ledit manchon peut comporter au moins deux ouvertures agencées pour permettre un essai d'étanchéité et l'injection du matériau thermiquement isolant.

De préférence, ledit manchon de raccordement comporte en outre des moyens de contrôle agencés pour contrôler la bonne réalisation des soudures à chacune des extrémités dudit manchon.

Enfin le corps du manchon comporte avantageusement une zone centrale flexible du type accordéon agencée pour permettre l'introduction dudit manchon sur les extrémités des tronçons de conduits à raccorder lorsque ceux-ci ne sont pas parfaitement alignés.

### Description sommaire des dessins

La présente invention et ses principaux avantages apparaîtront mieux dans la description d'un mode de réalisation préféré, en référence aux dessins annexés dans lesquels:
la figure 1 est une vue en coupe longitudinale d'une zone de raccordement de deux tronçons de tubes à raccorder d'un réseau de chauffage urbain réalisé selon le procédé de l'invention,
la figure 2 est une vue en coupe longitudinale d'un manchon de raccordement selon l'invention, et
la figure 3 est une vue transversale latérale gauche du raccordement de deux tronçons de tubes d'un réseau de chauffage urbain réalisé selon l'invention.

### Meilleure(s) manière(s) de réaliser l'invention

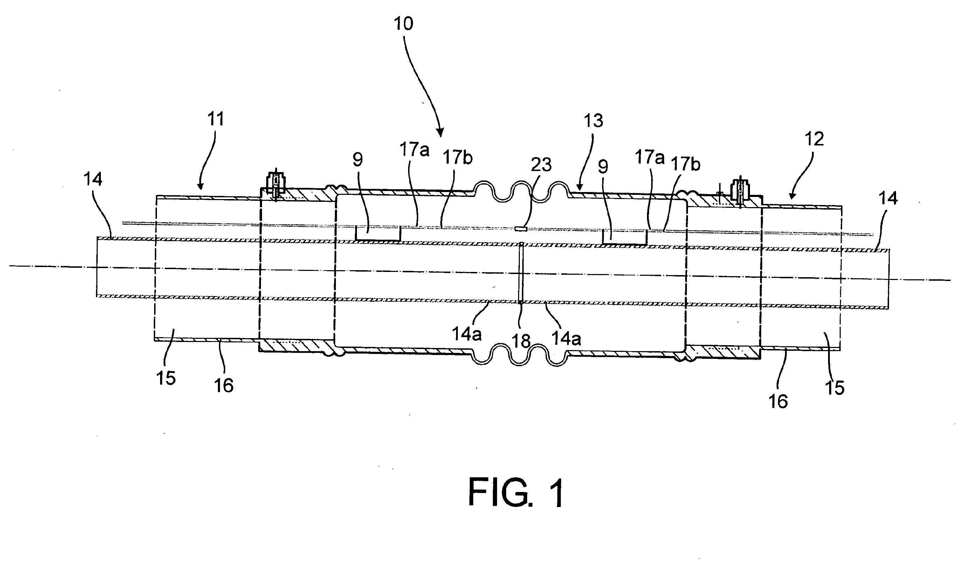

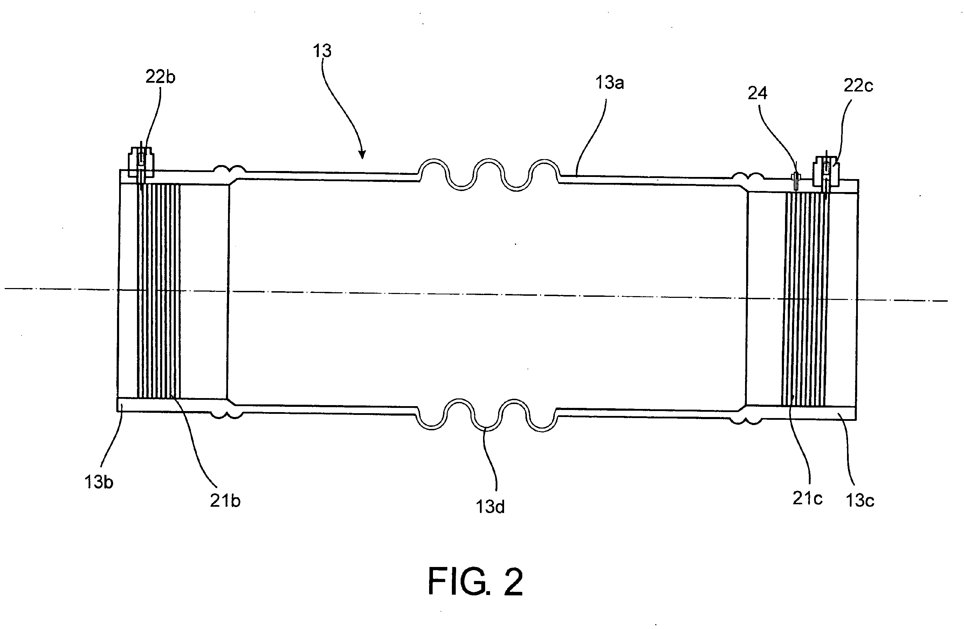

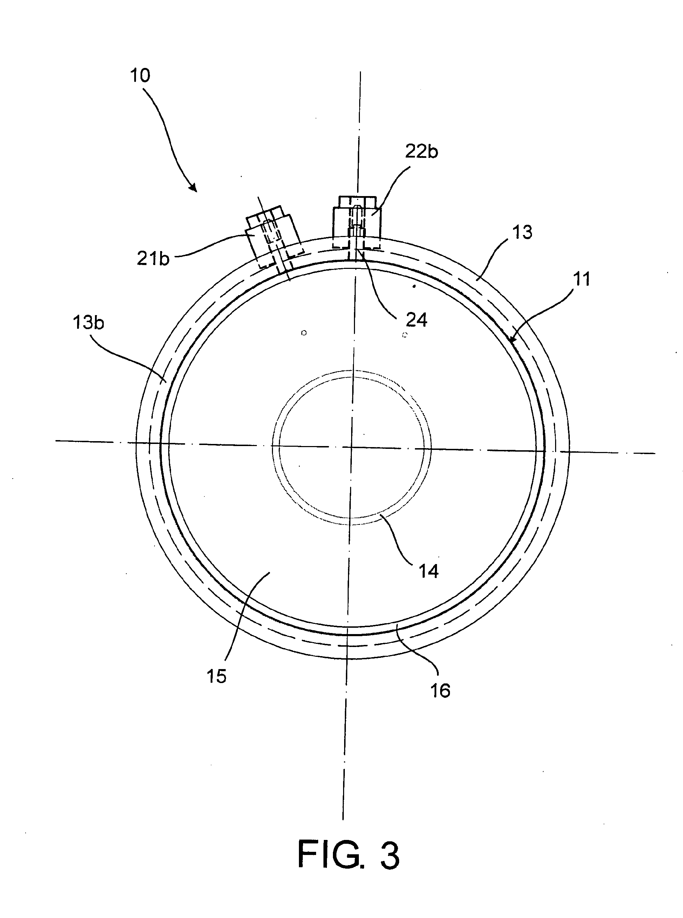

Les figures 1 et 3 représentent, respectivement en vues partielle longitudinale et transversale, un secteur d'un réseau de chauffage à distance, appelé réseau de chauffage urbain, et plus particulièrement une zone de raccordement 10 de deux tronçons 11 et 12 de conduits qui constituent ce réseau. Les deux tronçons 11 et 12 sont raccordés par un manchon de raccordement 13 qui est représenté plus en détail par la figure 2.

Les tronçons de conduits 11 et 12 comportent un tube central métallique 14, directement entouré d'une couche 15 épaisse d'un matériau thermiquement isolant, par exemple une mousse de polyuréthane ou similaire, qui est elle-même entourée d'une gaine rigide 16 cylindrique réalisée en un matériau thermoplastique rigide, tel que par exemple du polyéthylène à haute densité. Ces trois composants sont coaxiaux, la gaine rigide extérieure 16 servant à protéger la couche isolante 15 contre toute pénétration d'humidité ou de sable, de terre ou d'autres substances parasites et à isoler thermiquement le tube central 14 qui véhicule le fluide caloporteur du réseau de chauffage. En outre, le réseau est équipé d'un circuit de contrôle comportant deux fils conducteurs, respectivement 17a et 17b, présents dans chaque conduit 11, 12 et qui doivent être connectés entre eux au niveau de chaque manchon de raccordement 13. Ces fils sont rendus solidaires du tube central métallique 14 par des entretoises 9 en matériel thermoplastique rigide placées sur ledit tube métallique 14 de façon à fixer et soutenir les fils électriques 17a et 17b.

Pour la réalisation d'un réseau de chauffage urbain, il convient de raccorder entre eux de nombreux conduits tels que décrits ci-dessus, qui sont tous réalisés en usine. L'opération de raccordement commence par une soudure bout à bout 18 des extrémités 14a des tubes métalliques centraux 14 de deux conduits 11 et 12 à raccorder disposés dans le prolongement l'un de l'autre. Cette soudure s'effectue en l'absence de la couche isolante 15. Elle se poursuit par la connexion des deux fils électriques 17a et 17b de chacun des conduits 11 et 12 à raccorder. Cette connexion se fait au moyen de connecteurs 23 servant à coupler respectivement les fils 17a et 17b. La phase suivante du raccordement implique la mise en place du manchon de raccordement 13.

Le manchon de raccordement 13, tel qu'illustré plus en détail par la figure 2, est réalisé en un matériau thermosoudable et constitué d'un corps central 13a et de deux embouts d'extrémité 13b, 13c. Les deux embouts d'extrémité au moins, qui sont en fait des embouts de recouvrement avec les tronçons de conduits à souder, ont un diamètre intérieur au moins approximativement égal, ou légèrement supérieur, au diamètre extérieur des tronçons de conduit à raccorder, et plus particulièrement au diamètre extérieur de la gaine rigide 16 en matière synthétique dure des conduits 11 et 12 à raccorder, de telle manière qu'ils puissent se mettre en place sur cette gaine rigide 16. Ils sont pourvus respectivement de deux résistances électriques 21b respectivement 21c, disposées à proximité de leur extrémité respective et intégrées dans cette extrémité, et de moyens de connexion électrique desdites résistances électriques. Lesdites résistances électriques 21b et 21c sont électriquement couplés par l'intermédiaire de deux cosses 22b et 22c à une source d'alimentation électrique (non représentée). Cette source d'alimentation électrique classique, dont la puissance est adaptée au manchon concerné, selon son diamètre, l'épaisseur de ses parois etc.., permet de fournir le courant électrique nécessaire pour provoquer par effet Joule la fusion superficielle des surfaces en contact des gaines rigides 16 des conduits 11 et 12 respectivement avec les embouts d'extrémité 13b et 13c du manchon de raccordement 13. Cette fusion superficielle garantit une électrosoudure étanche des composants, c'est-à-dire une liaison parfaite des deux conduits à raccorder et du manchon de raccordement correspondant. Un témoin de soudage 24, dont la forme change lorsque la soudure est correctement exécutée et terminée, est disposé sur le corps du manchon 13. Un essai de pression complète encore le contrôle de l'électrosoudure effectuée. Le corps 13a du manchon 13 est également pourvu sur sa périphérie d'une zone centrale flexible 13d en forme d'accordéon. Cette zone flexible 13d permet la mise en place correcte du manchon 13 lorsque les deux tronçons de conduit 11 et 12 à raccorder ne sont pas tout à fait dans le prolongement l'un de l'autre et qu'ils peuvent former un léger coude.

Lorsque le thermosoudage du manchon de raccordement 13 sur les tronçons de conduits 11 et 12 a été effectué et contrôlé, l'opération suivante consiste à former la couche isolante 15 à l'intérieur du manchon 13. Cette opération s'effectue par l'injection, au travers d'ouvertures appropriées, des composants d'une mousse expansible et le rebouchage de ces ouvertures à l'aide de bouchons étanches et également électrosoudés.

La réalisation de la jonction de deux tronçons de conduits selon le procédé de l'invention est extrêmement rapide et efficace. Elle ne nécessite plus une intervention de spécialiste puisque l'électrosoudage des embouts d'extrémité du manchon garantit l'étanchéité de la liaison quasiment sans intervention humaine, tout en permettant une certaine flexibilité de la jonction entre les deux tubes. L'opération est rapide, économique et sûre. De ce fait le procédé de l'invention et le manchon qui permet sa mise en oeuvre s'inscrivent dans une démarche économique grâce au gain de temps et à un certain automatisme des interventions garantissant le résultat.

Diverses variantes pourraient être imaginées, telles que par exemple la construction du manchon en deux demi-coques. Une telle démarche pourrait faciliter la mise en place, mais risquerait d'engendrer une nouvelle zone à risque d'infiltration.

## Revendications

1. Procédé de raccordement de tronçons de conduits d'un réseau de chauffage urbain, ces conduits comportant un tube central métallique (14), une gaine rigide périphérique (16) en un matériau synthétique thermosoudable, coaxiale au tube central (14), et au moins une couche (15) d'un matériau thermiquement isolant remplissant l'espace ménagé entre ledit tube central (14) et ladite gaine rigide périphérique (16), cette couche isolante (15) contenant des fils électriques et/ou optiques (17a, 17b) d'un circuit de contrôle du réseau de chauffage urbain, **caractérisé en ce que**, pour raccorder deux tronçons de conduits (11, 12) disposés dans le prolongement l'un de l'autre, l'on effectue successivement les opérations suivantes :
- des moyens de connexion électrique desdites résistances électriques,
- l'on procède au thermosoudage du manchon de raccordement (13 l'on soude les tubes centraux métalliques (14) des extrémités juxtaposées des deux tronçons de conduits (11, 12),
- l'on connecte les fils (17a, 17b) du circuit de contrôle de chaque thermosoudable autour de la gaine rigide périphérique (16) des deux conduits (11, 12) à raccorder, au niveau de leur jonction, ledit manchon de raccordement (13) étant réalisé en un matériau thermosoudable et constitué d'un corps central (13a) et de deux embouts d'extrémité (13b, 13c), au moins lesdits embouts d'extrémité ayant un diamètre intérieur au moins approximativement égal au diamètre extérieur des tronçons de conduit à raccorder et étant pourvus respectivement de deux résistances électriques intégrées (21 b, 21 c), disposées à proximité de leur extrémité respective, et couplées rigidement à tronçon de conduit,
- l'on met en place un manchon de raccordement (13)) sur la gaine rigide périphérique (16) en connectant lesdits moyens de connexion électrique à une source d'alimentation électrique adaptée audit manchon, et
- l'on remplit l'espace ménagé entre le tube central métallique (14) et le manchon de raccordement (13) soudé sur des zones de recouvrement desdits tronçons par injection d'une matière synthétique isolante expansible.

2. Procédé selon la revendication 1, **caractérisé en ce que** l'on effectue le thermosoudage du manchon de raccordement (13) sur les tronçons de conduits (11, 12) en chauffant ledit manchon de raccordement (13) au moyen des résistances électriques intégrées (21 b, 21 c) pour provoquer la fusion superficielle des surfaces en contact.

3. Manchon de raccordement (13) de tronçons de conduits d'un réseau de chauffage urbain, pour la mise en oeuvre du procédé selon les revendications précédentes, lesdits conduits (11, 12) comportant un tube central métallique (14), une gaine rigide périphérique (16) en un matériau synthétique thermosoudable, coaxiale au tube central (14), et au moins une couche (15) d'un matériau thermiquement isolant remplissant l'espace ménagé entre ledit tube central (14) et ladite gaine rigide périphérique (16), ladite couche isolante (15) contenant des fils électriques ou optiques (17a, 17b) d'un circuit de contrôle du réseau de chauffage urbain, **caractérisé en ce que** ledit manchon de raccordement (13) est réalisé en un matériau thermosoudable et constitué d'un corps central (13a) et de deux embouts d'extrémité (13b, 13c), au moins lesdits embouts d'extrémité ayant un diamètre intérieur au moins approximativement égal au diamètre extérieur des tronçons de conduit à raccorder et étant pourvus respectivement de deux résistances électriques (21 b, 21 c), disposées à proximité de leur extrémité respective, intégrées dans lesdites extrémités et connectées à deux cosses (22b, 22c) agencées pour être connectées à des moyens de connexion électrique desdites résistances électriques, lesdits moyens de connexion électrique étant agencés pour provoquer la fusion superficielle des surfaces en contact.

4. Manchon selon la revendication 3, **caractérisé en ce que** lesdits embouts d'extrémité (13b, 13c) dudit manchon (13) ont une section intérieure légèrement supérieure à la section extérieure des tronçons de conduits (11, 12).

5. Manchon selon la revendication 3, **caractérisé en ce qu'**il comporte au moins deux ouvertures agencées pour permettre un essai d'étanchéité et l'injection du matériau thermiquement isolant.

6. Manchon selon la revendication 3, **caractérisé en ce qu'**il comporte des moyens de contrôle (24) agencés pour contrôler la bonne réalisation des soudures à chacune des extrémités (13b, 13c) dudit manchon (13).

7. Manchon selon la revendication 3, **caractérisé en ce que** le corps central (13a) dudit manchon (13) comporte une zone centrale flexible (13d) agencée pour permettre l'introduction dudit manchon (13) sur les extrémités des tronçons de conduits à raccorder (11, 12) lorsque ceux-ci ne sont pas parfaitement alignés.
